## Europäisches Patentamt
## European Patent Office
## Office européen des brevets

(19)

(11) Publication number: **0 040 662**
**B1**

(12)

# EUROPEAN PATENT SPECIFICATION

(45) Date of publication of patent specification: **08.08.84**

(51) Int. Cl.³: **G 01 N 27/12**

(21) Application number: **80400730.0**

(22) Date of filing: **23.05.80**

(54) **Temperature compensated resistive oxygen sensor and method of making the sensor resistor elements.**

(43) Date of publication of application:
**02.12.81 Bulletin 81/48**

(45) Publication of the grant of the patent:
**08.08.84 Bulletin 84/32**

(84) Designated Contracting States:
**DE FR GB IT SE**

(56) References cited:
EP - A - 0 001 512
DE - A - 2 828 702
GB - A - 2 005 026
US - A - 3 400 054
US - A - 3 558 280
US - A - 3 915 135
US - A - 4 001 756
US - A - 4 162 631

(73) Proprietor: **BENDIX AUTOLITE CORPORATION**
**PO Box 880 1600 N. Union Street**
**Fostoria Ohio 44830 (US)**

(72) Inventor: **Romine, Donald Joseph**
**2405 Hawthorne Dr.**
**Fostoria Ohio 44830 (US)**

(74) Representative: **Maguet, André et al,**
**Service Brevets Bendix 44, Rue François 1er**
**F-75008 Paris (FR)**

## Description

This invention relates to a temperature compensated oxygen sensor for determining the oxygen content in the exhaust gas of an internal combustion engine, this sensor including an insulating ceramic support, a first resistor on the ceramic support, said first resistor consisting of a material the resistance of which varies as a function only of temperature, and a second resistor on the ceramic support, said second resistor consisting of a material the resistance of which varies as a function of temperature and the partial pressure of oxygen in the gas to which it is exposed. The invention also relates to a method of making the first and second resistor of such a sensor.

The exhaust gas of automobile internal combustion engines contains several substances, including carbon monoxide, nitrogen oxides and various unoxidized or only partially oxidized hydrocarbons which contribute to air pollution. These substances can be converted to non-poisons, like carbon dioxide, nitrogen and water by subjecting the exhaust gas to temperatures in excess of 600°C while exposing it to catalysts, but, in order to achieve relatively complete conversion, it is necessary that the ratio of fuel to air that is provided to the engine be controlled so that it approximates stoichiometric proportions. Since it is known that the amount of oxygen contained in the exhaust gas provides an indication of whether such stoichiometric conditions exist, it has been suggested that an oxygen sensor be positioned in the exhaust system of an automobile so that it is exposed to its exhaust gas. This sensing element may be connected to a control device which regulates fuel supply and may thereby ensure that the correct ratio of fuel to air is provided to the engine so that the noxious components of the exhaust gas which are emitted into the atmosphere will be at as low a level as is possible.

Such oxygen sensing elements generally fall into two classes. The first of these classes includes solid electrolyte sensors. These sensors are made of a material such as zirconia which responds to the difference in the partial pressures of oxygen between one of its sides which is exposed to exhaust gas and another of its sides which is exposed to ambient air as a reference source. Such solid electrolyte sensors are described in U.S. Patent Re. 28,792, reissued April 27, 1976 (previously US—A—3,400,054).

The other type of oxygen sensing element is generally referred to as a resistive type sensor. These sensors make use of an operative type material such as titania, the electrical resistance of which varies according to the amount of oxygen in the gas to which it is exposed. The principle and operation of such sensors are explained in US—A—3,558,280 and the use of a titania resistance type sensor in an engine exhaust control is explained in US—A—3,915,135.

While the resistance type sensors allow for simplicity of construction and installation by virtue of the fact that they do not have to be exposed to both the exhaust gas and a reference source of gas, a problem has been associated with their use. This problem results from the fact that although titania and similar materials are sensitive to changes in the oxygen partial pressure of the gas to which they are exposed, they are also sensitive to changes in temperature. For instance, a typical titania sensor must operate over a range from 300°C to 900°C but the electrical resistance of the sensor, over the entire range, does not change in a manner that permits a deliniation between a lean air to fuel mixture and a rich air to fuel mixture. Specifically, for a lean air to fuel mixture over the range of 300°C and 900°C, the dc resistance of the typical titania sensor drops from $3 \times 10^9$ ohms down to about $2 \times 10^4$ ohms. While the dc resistance for a rich air to fuel mixture, over the same range, varies from $3 \times 10^6$ ohms down to about 40 ohms. Therefore, the resistance characteristics for a rich and a lean mixture for the sensor overlap. Accordingly, for any temperature excursion exceeding about 250°C it is impossible, with an uncompensated titania sensor, to determine whether the air/fuel ratio is rich or lean. Of course, this is undesirable, as it would not be possible to control the air to fuel mixture.

A number of solutions have been suggested for this problem. It has, for example, been suggested that a heater element in conjunction with a thermostat be provided to maintain resistor type sensors at a constant temperature. Such heater arrangements, however, present certain disadvantages in that they are relatively complex and therefore are subject to failure and are expensive to manufacture. It has also been suggested that a resistor type sensor be made so that the sensor is, itself, temperature compensated. That is, a resistor type sensor is constructed with two ressistors. In such a sensor there is provided a first resistor, the resistance of which varies as a function of temperature and the partial pressure of oxygen to which it is exposed, and a second resistor, the resistance of which varies only as a function of temperature. It is known that titania is a suitable material for the first resistor and that a stabilized zirconia material may be used in the second resistor (see GB—A—2005026). It is also known from this document that such temperature compensated oxygen sensors may be employed in conjunction with certain circuitry which compares the voltages across the two resistors. This circuitry is thereby able to convert the temperature dependent input signal which it receives from the sensor to a temperature independent output signal by which it controls the air to fuel ratio provided to the engine.

Although such temperature compensated sensors are somewhat simpler than those sensors employing a heater and thermostat, their manufacture may still be unnecessarily complex. This complexity results from the fact that the component resistors of a form of these temperature compensated sensors are in the form of wafers or discs which are connected to electrical leads. If, for example, one of these wafers is composed of titania, titania must first be calcined, cooled, crushed, ball milled with water and then dried. The dry powder must then be blended with solvents, de-aired, cast into tape and dried. The wafers must then be punched from the tape and then suitably positioned on a support. Such a process is expensive and time consuming. Furthermore, it entails the risk that the resistor material will become contaminated and it exposes the persons performing it to the health and fire hazards associated with casting solvents.

From DE—A—2 828 702, a gas sensor is known having an insulating ceramic support to the front surface of which an oxygen sensitive metal oxide resistive layer is applied by means of a hot thin layer technique such as plasma or flame spraying.

The present invention overcomes the limitations and disadvantages of the prior art arrangements by providing a temperature compensated oxygen sensor for determining the oxygen content in the exhaust gas of an internal combustion engine, comprising the features of Claim 1.

According therefore to the invention there is provided a temperature compensated oxygen sensor for use in the exhaust path of an internal combustion engine which requires less processing and allows simpler assembly than do prior sensors. Because the sensor materials may be sprayed in place, the present invention eliminates the need to manufacture tapes or discs and thereby allows easier control of contamination, crystal size and porosity. Accordingly, a durable, accurate and less expensive sensor results.

Moreover, according to the invention, a metod of making the first and second resistors of the oxygen sensor of Claim 1 is defined in Claim 6.

One way of carrying out the invention is described in detail below with reference to the drawings which illustrate one specific embodiment of this invention, in which:

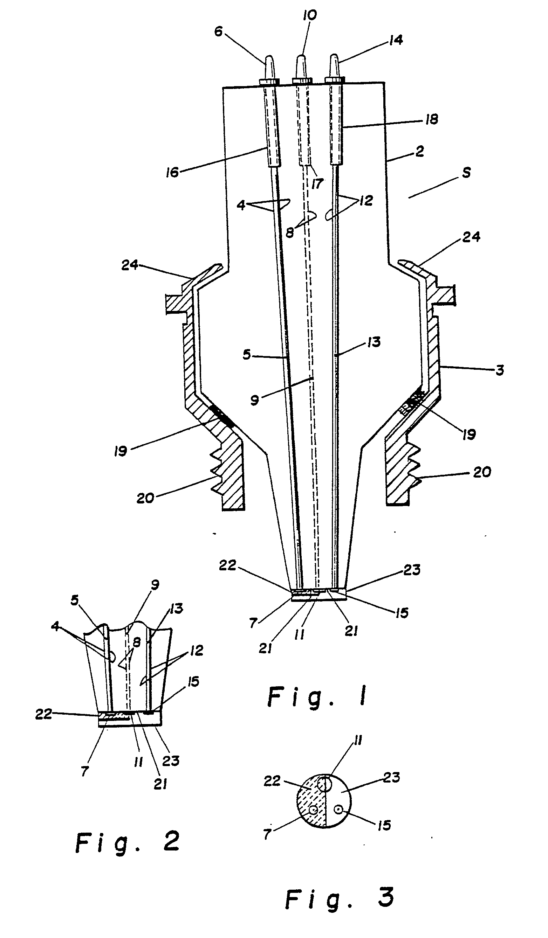

FIGURE 1 is a cross sectional view of an oxygen sensor incorporating the principles of this invention;

FIGURE 2 is a detailed view of a portion of the cross sectional view of the oxygen sensor shown in FIGURE 1; and

FIGURE 3 is a plan view of the surface of the oxygen sensor which is exposed to exhaust gas.

Referring to the drawings, the oxygen sensor S includes an insulating ceramic support 2 which is surrounded by a steel casing 3. Extending lengthwise through the ceramic support 2 are three passageways which allow three electrodes located on the side of the ceramic support which is exposed to the exhaust gas to be electrically connected to terminals on the opposite side of the ceramic support 2. The electrodes and the conductive leads are preferably formed of platinum, although the same may comprise other platinum group metals such as ruthenium, rhodium, palladium or the like and their alloys, or alloys of these platinum group metals and base metals, or the same may comprise gold, silver and the like metallic conductors. For the purpose of brevity, the invention will be described as having platinum electrodes, as well as leads, in the following description. While this connection may be accomplished by means of platinum wires, it is preferred that a platinum coating on the surface of these passageways be used to conduct current between said terminals and electrodes. Platinum coating 4 on the surface of passageway 5, for instance, allows current to flow between terminal 6 and electrode 7. In the same way, platinum coating 8 on the surface of passageway 9 connects terminal 10 with electrode 11 and platinum coating 12 on the surface of passageway 13 connects terminal 14 with electrode 15. It is preferred' that the diameter of electrode 11 be somewhat greater than electrodes 7 and 15. Additionally, the connection between platinum coatings 4, 8 and 12 and terminals 6, 10 and 14 is effected, respectively, by conductive seals 16, 17 and 18. Disposed between ceramic support 2 and steel casing 3 is a gasket 19. The steel casing 3 has a plurality of threads 20 which enable the sensor S to be attached to similar threads in the exhaust system of an automobile engine.

As has been noted, electrodes 7, 11 and 15 are disposed on the surface 21 of the ceramic support 2 which is to be exposed to the automobile engine's exhaust gas. Also disposed on that surface, in a particular arrangement, is a temperature sensitive resistive layer 22 and an oxygen and temperature sensitive resistive layer 23. The temperature sensitive resistive layer 22 is a layer of a material such as stabilized zirconia $(ZrO_2)$, the resistance of which varies as a function only of temperature. The zirconia may be stabilized by elements such as calcium, barium, strontium, yttrium, lanthanum, scandium, ytterbium and samarium. Calcium stabilized zirconia and yttrium stabilized zirconia are well known and are obtained by adding approximately .05 to .3% (Mole weight) of yttria $(Y_2O_3)$ to zirconia $(ZrO_2)$. Examples of materials that can be substituted for the zirconia are yttrium oxide $(Y_2O_3)$, aluminum oxide $(Al_2O_3)$, cerium oxide $(CeO_2)$, hafnium oxide $(HfO_2)$ and thorium oxide $(Th_2O_3)$. Another important feature of the resistive layer 22 is that it is applied to surface 21 of the ceramic support 2 so that it completely covers the surface of electrode 7 and partially covers the surface of electrode 11.

The oxygen and temperature sensitive resistive layer 23 is comprised of a layer of a material, such as titania ($TiO_2$), that displays the property that its resistance is a function of both temperature and the partial pressure of oxygen in the gas to which it is exposed. While it is preferred that this layer be composed of titania, materials displaying similar properties, such as cobalt monoxide (CoO), may also be used. The oxygen and temperature sensitive resistive layer is applied so that it covers the entire surface of electrode 15 and that portion of the surface of electrode 11 remaining uncovered by the temperature sensitive resistive layer 22. The temperature and oxygen sensitive resistive layer 23 also covers the temperature sensitive resistive layer 22.

In the method by which the sensor of the present invention is manufactured, the three passageway ceramic support 2 is first extruded using standard spark plug insulator extrusion techniques. The passageways 5, 9 and 13 are then counterbored at the top of the support 2 so that they are of a sufficient diameter to receive terminals 6, 10 and 14. The ceramic support 2 is further formed using spark plug grinding techniques and is then fired in a kiln.

The platinum coatings 4, 8 and 12 may then be formed on the surfaces of passageways 5, 9 and 13 by pouring a platinum paste, the viscosity of which has been suitably adjusted, through said passageways. The platinum electrodes 7, 11 and 15 are thereafter formed so as to be conductively connected to platinum coatings 4, 8 and 12. After first being allowed to dry, the platinum coatings 4, 8 and 12 are fired at a temperature which is appropriate for the particular paste used.

At this point a part of the surface 21 of the ceramic support 2 is masked with a template or the like so that electrode 7 is exposed, electrode 11 is partially masked and electrode 15 is completely masked. A hot thin-layer technique, defined herein to include plasma spraying and flame-spraying, is then used to apply to the unmasked part of surface 21 a fine grained powder of a ceramic oxide material, the resistance of which varies only as a function of temperature. A fine grained powder of zirconia is found to be suitable for this purpose. The temperature sensitive resistive layer 22, which covers the first electrode 7 and a portion of the second electrode 11, is thereby formed. The template is then removed and a fine grained powder of a ceramic oxide such as titania, the resistance of which varies as a function of temperature and the partial pressure of oxygen in the gas to which it is exposed, is applied to the entire surface 21. This material is also applied by a hot thin-layer technique so as to form the oxygen and temperature sensitive resistive layer 23. As has been noted, the temperature sensitive resistive layer 23 covers the entire surface 21 of the ceramic support 2, including the temperature sensitive resistive layer 22, the third electrode 15 and that portion of the second electrode 11 not covered by the temperature sensitive resistive layer 22.

It is also found that enhanced results may be obtained if fine grained platinum powder is added to the ceramic oxide powder being plasma or flame sprayed. Such results are also obtained if the ceramic oxide powder is immersed in platinum chloride solution prior to plasma or flame spraying.

After the temperature sensitive resistive layer 22 and the oxygen and temperature sensitive resistive layer 23 are formed, the platinum coatings 4, 8 and 12 are then conductively connected to the metal terminals 6, 10 and 14, preferably by conductive seals 16, 17 and 18. Said seals may be formed by standard spark plug sealing techniques. That is, a copper-glass mixture which contains approximately forty percent copper is heated to the softening temperature of the glass and is applied to the passageways 5, 9 and 13. The terminals 6, 10 and 14 are then forced into the molten copper-glass mixture and maintained under pressure until the glass solidifies. The terminals may also be connected to the leads by other means such as with brazing compounds or metallic flake, or the like. The ceramic support 2 is then placed on gasket 19 within the steel casing 3. Finally, the steel casing 3 is crimped as at 24 and heat pressed in a known manner so as to seal the ceramic support 2 within the steel casing 3 and prevent the passage of gas.

**Claims**

1. Temperature compensated oxygen sensor for determining the oxygen content in the exhaust gas of an internal combustion engine including an insulating ceramic support (2), a first resistor (22) on said ceramic support (2), said first resistor (22) consisting of a material the resistance of which varies as a function only of temperature, and a second resistor (23) on said ceramic support (2), said second resistor (23) consisting of a material the resistance of which varies as a function of temperature and the partial pressure of oxygen in the gas to which it is exposed, characterized in that the insulating ceramic support (2) has first, second and third electrodes (7, 11, 15) disposed, in spaced relation to each other, on the surface (21) of the ceramic support (2) that is to be exposed to the exhaust gas; in that the first resistor (22) is formed of a first layer (22) of said temperature sensitive resistance material covering the first electrode (7) and a portion of the second electrode (11); and in that the second resistor (23) is formed of a second layer (23) of said temperature and oxygen sensitive resistance material covering the third electrode (15), the remaining portion of the second electrode (11) and the first layer (22).

2. Temperature compensated oxygen sensor as claimed in claim 1, characterized in that the temperature sensitive resistive material is a stabilized zirconia.

3. Temperature compensated oxygen sensor as claimed in claim 1, characterized in that the temperature and oxygen sensitive resistance material is selected from the group consisting of titanium dioxide and cobalt monoxide.

4. Temperature compensated oxygen sensor as claimed in claim 1, characterized in that there are provided three terminals (6, 10, 14) disposed on the end of the ceramic support (2) opposite from the electrodes (7, 11, 15), each of said terminals (6, 10, 14) being electrically connected to a different electrode by electrical connecting means (4, 16; 8, 17; 12, 18), and said electrical connecting means being disposed inside three longitudinal passageways (5, 9, 13) in the ceramic support (2).

5. Temperature compensated oxygen sensor as claimed in claim 4, characterized in that the electrical connecting means (4, 16; 8, 17; 12, 18) include platinum coatings (4, 8, 12) on the interior surfaces of said passageways (5, 9, 13).

6. Method of making the first and second resistor of the temperature compensated oxygen sensor defined in Claim 1, characterized in that the steps of said method comprise: applying a template so as to mask a first part of said surface (21), said first part including the third electrode (15) and a portion of the second electrode (11), such that a second part of said surface (21) including the first electrode (7) and the other portion of the second electrode (11) remains unmasked; applying to the second part of said surface (21) by a hot thin-layer technique a layer (22) of a first resistive ceramic oxide material, the resistance of said material varying only as a function of temperature; removing the template so that both the first and second parts of said surface (21) are unmasked; and applying to the first and second parts of said surface (21) a layer (23) of a second resistive ceramic material, the resistance of said material varying as a function of temperature and the partial pressure of oxygen in the gas to which it is exposed.

7. Method as claimed in claim 6, characterized in that at least one of the layers (22, 23) is applied to said surface (21) by flame spraying.

8. Method as claimed in claim 6, characterized in that at least one of the layers (22, 23) is applied to said surface (21) by plasma spraying.

9. Method as claimed in claim 6, characterized in that the first resistive ceramic oxide material is a stabilized zirconia material.

10. Method as claimed in claim 6, characterized in that the second resistive ceramic oxide material is selected from the group consisting of titanium dioxide and cobalt monoxide.

## Patentansprüche

1. Temperaturkompensierter Sauerstoffsensor zur Bestimmung des Sauerstoffgehaltes im Abgas einer Brennkraftmaschine mit einem isolierten Keramiklager (2), einem ersten Widerstand (22) auf dem Keramiklager (2), der aus einem Material besteht, dessen Widerstand sich nur in Abhängigkeit von der Temperatur ändert, und einem zweiten Widerstand (23) auf dem Keramiklager (2), der aus einem Material besteht, dessen Widerstand sich in Abhängigkeit von der Temperatur und dem Sauerstoffpartialdruck in dem Gas, dem das Material ausgesetzt ist, ändert, dadurch gekennzeichnet, daß das isolierende Keramiklager (2) eine erste, zweite und dritte Elektrode (7, 11, 15) aufweist, die im Abstand voneinander auf der Oberfläche (21) des Keramiklagers (2) angeordnet sind, die dem Abgas ausgesetzt werden soll, daß der erste Widerstand (22) aus einer ersten Schicht (22) des temperaturempfindlichen Widerstandsmaterials besteht, die die erste Elektrode (7) und einen Abschnitt der zweiten Elektrode (11) bedeckt, und daß der zweite Widerstand (23) aus einer zweiten Schicht (23) des temperatur- und sauerstoffempfindlichen Widerstandsmaterials besteht, die die dritte Elektrode (15), den restlichen Abschnitt der zweiten Elektrode (11) und die erste Schicht (22) bedeckt.

2. Sauerstoffsensor nach Anspruch 1, dadurch gekennzeichnet, daß das temperaturempfindliche Widerstandsmaterial stabilisiertes Zirkondioxid ist.

3. Sauerstoffsensor nach Anspruch 1, dadurch gekennzeichnet, daß das temperatur- und sauerstoffempfindliche Widerstandsmaterial aus der Gruppe ausgewählt ist, die aus Titandioxid und Kobaltmonoxid besteht.

4. Sauerstoffsensor nach Anspruch 1, dadurch gekennzeichnet, daß an dem Ende des Keramiklagers (2), das den Elektroden (7, 11, 15) gegenüberliegt, drei Polklemmen (6, 10, 14) vorgesehen sind, die jeweils über elektrische Anschlußeinrichtungen (4, 16; 8, 17; 12, 18) an eine unterschiedliche Elektrode angeschlossen sind, und daß die elektrischen Anschlußeinrichtungen innerhalb von drei Längskanälen (5, 9, 13) im Keramiklager (2) angeordnet sind.

5. Sauerstoffsensor nach Anspruch 4, dadurch gekennzeichnet, daß die elektrischen Anschlußeinrichtungen (4, 16; 8, 17; 12, 18) Platinschichten (4, 8, 12) auf den Innenflächen der Kanäle (5, 9, 13) umfassen.

6. Verfahren zur Herstellung des ersten und zweiten Widerstands des temperaturkompensierten Sauerstoffsensors nach Anspruch 1, gekennzeichnet durch die folgenden Schritte: Aufbringen einer Schablone zur Abdeckung eines ersten Teiles der Oberfläche (21), der die dritte Elektrode (15) und einen Teil der zweiten Elektrode (11) umfasst, so daß ein zweiter Teil der Oberfläche (21) einschließlich der ersten Elektrode (7) und des anderen Teiles der zweiten Elektrode (11) nicht abgedeckt wird, Aufbringen einer Schicht (22) eines ersten keramischen oxidischen Widerstandsmaterials über eine Heißdünnschichttechnik auf die Oberfläche (21), wobei der elektrische Widerstand dieses Materials sich nur in Abhängigkeit von der Temperatur ändert, Entfernen der Schablone, so daß der erste und zweite Teil der Oberfläche (21) frei liegen, und Aufbringen einer Schicht (23) eines zweiten keramischen Widerstandsmaterials auf den ersten und zweiten Teil der Oberfläche (21), dessen Widerstand sich in Abhängigkeit von der Temperatur und dem Sauerstoffpartialdruck in dem Gas, dem das Material ausgesetzt ist, ändert.

7. Verfahren nach Anspruch 6, dadurch gekennzeichnet, daß mindestens eine der Schichten (22, 23) auf die Oberfläche (21) durch Flammspritzen aufgebracht wird.

8. Verfahren nach Anspruch 6, dadurch gekennzeichnet, daß mindestens eine der Schichten (22, 23) auf die Oberfläche (21) durch Plasmaspritzen aufgebracht wird.

9. Verfahren nach Anspruch 6, dadurch gekennzeichnet, daß als erstes keramisches oxidisches Widerstandsmaterial stabilisiertes Zirkondioxid eingesetzt wird.

10. Verfahren nach Anspruch 6, dadurch gekennzeichnet, daß das zweite keramische oxidische Widerstandsmaterial aus der Gruppe ausgewählt wird, die aus Titandioxid und Kobaltmonoxid besteht.

## Revendications

1. Détecteur d'oxygène composé en température pour déterminer la teneur en oxygène des gaz d'échappement d'un moteur à combustion interne comportant un support en céramique isolant (2) une première résistance (22) disposée sur le support (2) en céramique, ladite première résistance (22) étant formée en une matière dont la résistance ne varie qu'en fonction de la température et une seconde résistance (23) disposée sur le support en céramique, ladite seconde résistance (23) étant formée en une matière dont la résistance varie en fonction de la température et de la pression partielle d'oxygène dans les gaz auxquels elle est exposée, caractérisé en ce que le support en céramique isolant (2) comporte des première, seconde et troisième électrodes (7, 11, 15) situées dans une disposition dans laquelle elles sont espacées les unes des autres, sur la surface (21) du support (2) en céramique qui doit être exposée aux gaz d'échappement, en ce que la première résistance (22) est constituée par une première couche (22) de ladite matière de résistance sensible à la température qui recouvre la première électrode et une partie de la seconde électrode (11); et en ce que la seconde résistance (23) est constituée par une seconde couche (23) de ladite matière de résistance sensible à la température et à l'oxygène qui recouvre la troisième électrode (15), la partie restante de la seconde électrode (11) et la première couche (22).

2. Détecteur d'oxygène compensé en température tel que revendiqué dans la revendication 1, caractérisé en ce que la matière de résistance sensible à la température est une zircone stabilisée.

3. Détecteur d'oxygène compensé en température tel que revendiqué dans la revendication 1, caractérisé en ce que la matière de résistance sensible à la température et à l'oxygène est choisie dans le groupe constitué par le dioxyde de titane et de monoxyde de cobalt.

4. Détecteur d'oxygène compensé en température tel que revendiqué dans la revendication 1, caractérisé en ce qu'il est prévu trois bornes (6, 10, 14) disposées sur l'extrémité du support (2) en céramique opposée à celle portant les électrodes (7, 11, 15), chacune desdites bornes (6, 10, 14) étant électriquement connectée à une électrode différente par des moyens de connexion électriques (4, 16; 8, 17; 12, 18) et lesdits moyens de connexion électriques étant disposés à l'intérieur des trois passages longitudinaux (5, 9, 13) formés dans le support (2) en céramique.

5. Détecteur d'oxygène compensé en température tel que revendiqué dans la revendication 4, caractérisé en ce que les moyens de connexion électriques (4, 16; 8, 17; 12, 18) comportent des revêtements (4, 8, 12) de platine sur les surfaces intérieures desdits passages (5, 9, 13).

6. Procédé de fabrication des première et seconde résistances du détecteur d'oxygène défini dans la revendication 1, caractérisé en ce que les étapes dudit procédé consistent: à appliquer un gabarit de façon à masquer une première partie de ladite surface (21), ladite première partie comprenant la troisième électrode (15) et une partie de la seconde électrode (11) de telle sorte qu'une seconde partie de ladite surface (21) comprenant la première électrode (7) et l'autre partie de la seconde électrode (11) reste non masquée; à appliquer à la seconde partie de ladite surface (21), par une technique de formation à chaud de couches minces, une couche (22) d'une première matière d'oxyde céramique résistive, la résistance de ladite matière ne variant qu'en fonction de la température; à retirer le gabarit de façon que les première et seconde parties de ladite surface (21) soient démasquées; et à appliquer aux première et seconde parties de ladite surface (21) une couche (23) d'une seconde matière d'oxyde céramique résistive; la résistance de ladite matière variante en fonction de la température et de la pression partielle d'oxygène dans les gaz auxquels elle est exposée.

7. Procédé tel que revendiqué dans la revendication 6, caractérisé en ce qu'au moins l'une des couches (22, 23) est appliquée à ladite surface par pulvérisation au chalumeau.

8. Procédé tel que revendiqué dans la revendication 6, caractérisé en ce qu'au moins l'une des couches (22, 23) est appliquée à ladite surface par pulvérisation au plasma.

9. Procédé tel que revendiqué dans la revendication 6, caractérisé en ce que la première matière d'oxyde céramique résistive est une matière de zircone stabilisée.

10. Procédé tel que revendiqué dans la revendication 6, caractérisé en ce que la seconde matière d'oxyde céramique résistive est choisie dans le groupe constitué par le dioxyde de titane et le monoxyde de cobalt.

# 0 040 662

Fig. 1

Fig. 2

Fig. 3